# EUROPÄISCHE PATENTSCHRIFT

(11) **EP 0 974 267 B1**
(45) Veröffentlichungstag und Bekanntmachung des Hinweises auf die Patenterteilung: **19.09.2001**
(21) Anmeldenummer: 99113900.7
(22) Anmeldetag: 16.07.1999
(51) Int. Cl.: A22B 3/02

(54) **Schlaggerät**
Striking implement
Outil de frappe

(30) Priorität: 22.07.1998 DE 19832857
(43) Veröffentlichungstag der Anmeldung: 26.01.2000
(73) Patentinhaber: Zelka, Ivan, 86157 Augsburg (DE)
(72) Erfinder: Zelka, Ivan, 86157 Augsburg (DE)
(74) Vertreter: Munk, Ludwig, Dipl.-Ing.

(56) Entgegenhaltungen:
- DE-C- 138 526
- DE-U- 9 103 738
- FR-A- 317 955
- US-A- 2 536 336

## Beschreibung

Die Erfindung betrifft ein Schlaggerät zum Betäuben und/oder Töten von kleineren Schlachttieren, insbesondere Fischen, mit einem schaftförmigen Tragkörper, auf dem ein an einem Ende gehaltener, entgegen der Wirkung einer Federkraft spannbarer Schlagbügel und eine diesem zugeordnete Spanneinrichtung aufgenommen sind.

Ein Schlaggerät dieser Art ist aus der DE-PS 138 526 bekannt. Bei dieser bekannten Anordnung enthält die Spanneinrichtung einen mit einem Handgriff versehenen, schwenkbaren Spannhebel, der zum Spannen einer dem Schlagbügel zugeordneten Schlagfeder mit dieser mittels einer Kette verbindbar ist. Nach erfolgtem Spannvorgang wird die Kette von der Schlagfeder gelöst. Die gespannte Schlagfeder ist dabei durch einen Arm eines vom Spannhebel unabhängigen Abzugshebels blockierbar. Die Durchführung des Spannvorgangs mittels eines an der Schlagfeder über eine Kette anhängbaren Spannhebels erfordert eine Zweihandbedienung und erweist sich daher als sehr umständlich. Außerdem ist es bei der bekannten Anordnung nicht möglich, mehrere Schläge in kurzer Folge hintereinander auszuführen, ohne das Schlaggerät vom Schlachttier abzunehmen. Die bekannte Anordnung erweist sich demnach als nicht einfach, sicher und bedienungsfreundlich genug.

Die DE 91 03 738 U1 zeigt eine stationäre Vorrichtung zum Töten von Fischen mit zwei eine Schale zum Ablegen des Schlachttiers bildenden, gegeneinander verstellbaren Halbschalen und mit einem einen Freiraum zwischen diesen Halbschalen durchgreifenden Schlagbügel, der als Arm eines zweiarmigen Hebels ausgebildet ist, dessen anderer Arm, an dem eine Spannfeder angreift, mit einer Spanneinrichtung zusammenwirkt. Diese enthält eine drehbare Welle mit einem Flansch, der zwei Nocken trägt, deren Bewegungskurve die Bewegungskurve des zugeordneten Hebelarms überschneidet. Auch hier ist es nicht möglich, mit Hilfe lediglich einer Hand mehrere Schläge in kurzem Abstand hintereinander auszuführen. Außerdem ist eine stationäre Anordnung für einen mobilen Einsatz beim Fischen etc. nicht brauchbar.

Hiervon ausgehend ist es daher die Aufgabe der vorliegenden Erfindung, eine Vorrichtung eingangs erwähnter Art mit einfachen und kostengünstigen Mitteln so zu verbessern, dass eine hohe Sicherheit, Bedienungsfreundlichkeit und Zuverlässigkeit erreicht werden.

Diese Aufgabe wird erfindungsgemäß dadurch gelöst, dass die Spanneinrichtung einen Schwenkhebel mit einem griffartigen Abzug und einem mit einer am freien Ende des Schlagbügels vorgesehenen Endklaue in und außer kämmenden Eingriff bringbaren Mitnehmerzahn aufweist, dessen äußerste Bewegungskurve die äußerste Bewegungskurve der Endklaue überschneidet.

Diesen Maßnahmen stellen nicht nur sicher, dass das erfindungsgemäße Schlaggerät gezielt angesetzt und durch Betätigung des Abzugs ausgelöst werden kann, wobei der Schlagbügel exakt an der gewünschten Stelle trifft, sondern ermöglicht in vorteilhafter Weise auch durch mehrmalige Betätigung des Abzugs eine Ausführung von mehreren, kurz aufeinander folgenden Schlägen, ohne die Bedienungshand vom Schlaggerät und dieses vom Schlachttier abnehmen zu müssen. Die erfindungsgemäßen Maßnahmen ergeben dementsprechend eine hohe Bedienungsfreundlichkeit, Sicherheit und Zuverlässigkeit.

Vorteilhafte Ausgestaltungen und zweckmäßige Fortbildungen der übergeordneten Maßnahmen sind in den Unteransprüchen angegeben. So kann die Schlagbewegung des Schlagbügels zweckmäßig durch einen Anschlag begrenzt sein. Hierdurch werden eine besonders hohe Funktions- und Bedienungssicherheit erreicht.

Vorteilhaft kann der Mitnehmerzahn der Spanneinrichtung eine als Druckfläche und eine als Anlauffläche ausgebildete Flanke aufweisen. Mit Hilfe der Druckfläche kann der Schlagbügel niedergedrückt und gespannt werden, bis auf Grund der dabei stattfindenden Schwenkbewegungen die gegenseitigen Anlageflächen von Mitnehmerzahn und Endklaue einander nicht mehr überdecken und dementsprechend außer Eingriff gelangen. Die der Druckfläche gegenüberliegende Anlauffläche erleichtert das Einrasten der Endklaue des nach der Ausführung eines Schlags am zugeordneten Anschlag anliegenden Schlagbügels unter den anlaufenden Mitnehmerzahn.

Eine weitere vorteilhafte Maßnahme kann darin bestehen, dass der Abzug des Schwenkhebels durch eine Abstellfeder vom schaftförmigen Tragkörper abstellbar und zum Spannen des Schlagbügels an den Tragkörper anlegbar ist. Hierdurch ist sichergestellt, dass der Mitnehmerzahn bei einer Entriegelung des Schwenkhebels automatisch in die Eingriffsstellung gebracht wird, womit das Gerät abzugsbereit ist.

In weiterer Fortbildung der übergeordneten Maßnahmen kann der Schlagbügel als freier Schenkel einer Schenkelfeder ausgebildet sein, die mit ihrer Windung auf einem Lagerstift aufgenommen ist und deren zweiter Schenkel am Tragkörper abgestützt ist. In Folge der Ausbildung des Schlagbügels als Feder ist sichergestellt, dass eine zusätzliche, dem Schlagbügel zugeordnete Feder nicht benötigt wird, was eine besonders einfache und kompakte Bauweise gewährleistet.

Zweckmäßig kann der Tragkörper eine dem Schlagbügel zugeordnete, konkave Randeinbuchtung aufweisen, in die der Schlagbügel beim Ausführen eines Schlags mit einem mittleren Abschnitt eintaucht. Diese Maßnahme erhöht die Zielgenauigkeit und damit die Sicherheit. Gleichzeitig wird hierdurch auch einer unsachgemäßen Verwendung des erfindungsgemäßen Schlaggeräts bei größeren Tieren und Unfällen vorgebeugt.

Eine weitere, besonders zu bevorzugende Maßnahme kann darin bestehen, dass dem Schlagbügel eine vorzugsweise mit einem Dom versehener Schlaghammer zugeordnet ist. Hierdurch werden eine besonders hohe Effektivität und Zuverlässigkeit erreicht.

Vorteilhaft kann der Schlagbügel im Bereich eines Endes der schaftförmigen Tragkörpers angeordnet sein, der im Bereich seines anderen Endes mit einer Stechklinge versehen ist. Dies ermöglicht eine sinnfällige Handhabung und ergibt gleichzeitig ein Kombigerät, das zur Betäubung und zur Ausführung eines Herzstichs etc. geeignet ist, was die Bedienungsfreundlichkeit weiter erhöht.

Weitere vorteilhafte Ausgestaltungen und zweckmäßige Fortbildungen der übergeordneten Maßnahmen sind in den restlichen Unteransprüchen und aus der nachstehenden Beispielsbeschreibung anhand der Zeichnung näher entnehmbar.

In der nachstehend beschriebenen Zeichnung zeigen:
- Figur 1: eine Seitenansicht eines erfindungsgemäßen Schlaggeräts,
- Figur 2: eine Draufsicht auf Figur 1 und
- Figur 3: ein Beispiel mit Dornaufsatz in Figur 1 entsprechender Darstellung.

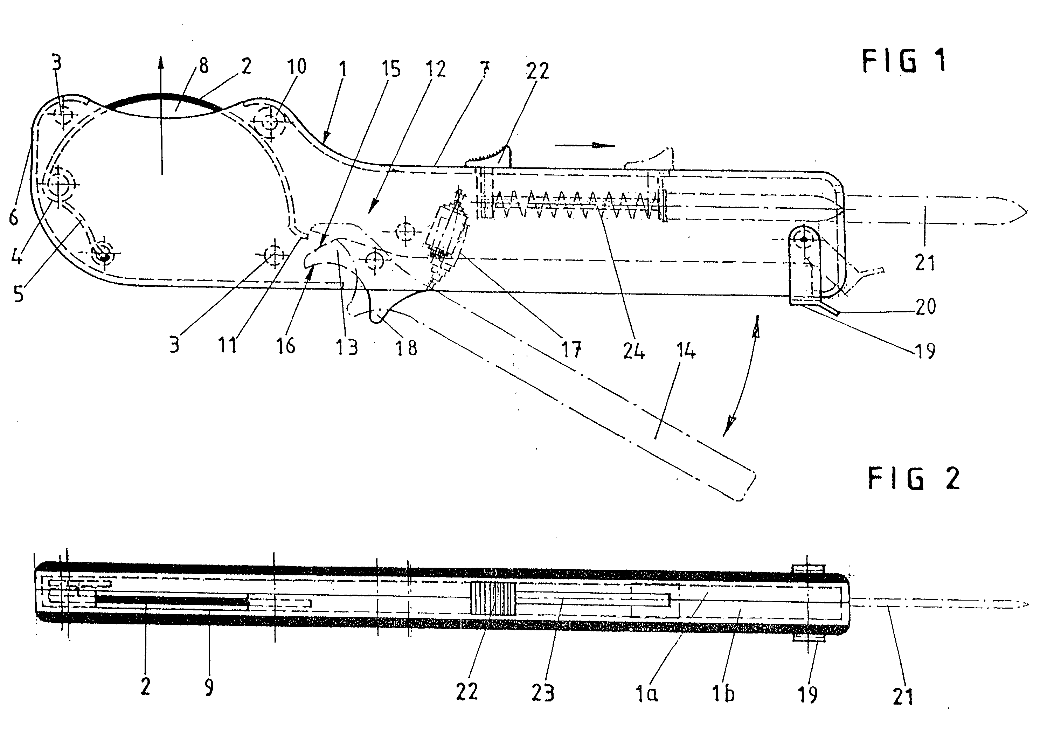

Das den Zeichnungen zugrundeliegende Schlaggerät enthält einen schaftförmigen Tragkörper 1, auf dem ein durch Federkraft antreibbarer und entgegen dieser Antriebskraft spannbarer Schlagbügel 2 und eine diesem zugeordnete Spanneinrichtung aufgenommen sind. Der Tragkörper besteht, wie am besten aus Figur 2 erkennbar ist, aus zwei mit ihren Randkanten teilweise aneinander anliegenden, wannenförmigen Gehäuseteilen 1a, 1b, die durch Querstifte 3 miteinander verbunden sind. Der Schlagbügel 2 wird durch einen etwa halbkreisförmig gebogenen, freien Schenkel einer Schenkelfeder gebildet, die mit ihrer Windung 4 auf einem Lagerstift in Form eines die beiden Gehäuseteile 1a, 1b verbindenden Querstift aufgenommen ist und deren zweiter Schenkel 5 am Tragkörper 1, hier ebenfalls an einem die Gehäuseteile verbindenden Querstifts, abgestützt ist.

Der Tragkörper 1 ist im Bereich eines dem Schlagbügel 2 zugeordneten Endes verbreitert, so dass sich praktisch ein dem Schlagbügel 2 zugeordneter Kopf 6 ergibt, der sich am Ende eines griffartigen Stiels 7 befindet. Der Tragkörper 1 ist im Bereich des Kopfes 6 mit einer dem Schlagbügel 2 zugeordneten, konkaven Randeinbuchtung 8 versehen, in die der Schlagbügel 2 bei der Ausführung eines Schlags mit einem mittleren Bogenabschnitt seiner nach außen, d.h. in Schlagrichtung, konvexen Kontur eintaucht. Die beiden Gehäuseteile 1a, 1b sind im Bereich der Randeinbuchtung 8 so ausgenommen, dass sich ein Durchtrittsschlitz 9 für den Schlagbügel 2 ergibt. Die nach außen gehende Schlagrichtung ist in Figur 1 durch einen Pfeil angedeutet.

Die Schlagbewegung des Schlagbügels und damit auch die Eintauchtiefe des Schlagbügels 2 in die Randeinbuchtung 8 sind durch einen Endanschlag 10 begrenzt, an dem der Schlagbügel 2 nach Ausführung eines Schlags mit einem innerhalb des Tragkörpers 1 sich befindenden Bereich anliegt, wie aus Figur 1 erkennbar ist. Zur Bildung des Endanschlags 10 kann einfach ein die beiden Gehäuseteile 1a, 1b verbindender Querstift vorgesehen sein. Im dargestellten Beispiel enthält der Endanschlag 10 eine auf einem derartigen Querstift aufgenommene Dämpfungsbüchse. Der Endanschlag 10 ist so angeordnet, dass das freie Ende des Schlagbügels 2 nicht aus dem Tragkörper 1 austauchen kann. Dieses freie Ende des Schlagbügels 2 ist in Form einer Endklaue 11 abgebogen, die ein Eingriffsorgan bildet, das zum Spannen des federnden Schlagbügels 2 mit der bereits erwähnten Spanneinrichtung zum Eingriff gebracht werden kann.

Die als Ganzes mit 12 bezeichnete Spanneinrichtung besitzt einen auf dem Tragkörper 1 schwenkbar gelagerten, zweiarmigen Schwenkhebel. Als Schwenkachse kann wiederum ein die beiden Gehäuseteile 1a, 1b miteinander verbindender Querstift Verwendung finden. Der dem Schlagbügel 2 zugewandte, kurze Arm des zweiarmigen Schwenkhebels ist als mit der Endklaue 11 in und außer kämmenden Eingriff bringbarer Mitnehmerzahn 13 ausgebildet. Der gegenüberliegende, längere Arm des zweiarmigen Schwenkhebels fungiert als griffartiger Abzug 14. Der Schwenkhebel ist so angeordnet, dass die zu seiner Schwenkachse konzentrische Bewegungskurve der äußersten Spitze des Mitnehmerzahns 13 und die zum Lager der den Schlagbügel 2 enthaltenden Schenkelfeder in etwa konzentrische Bewegungskurve der äußersten Spitze der Endklaue 11 des Schlagbügels 2 miteinander verschnitten sind. Hierdurch wird erreicht, dass der Mitnehmerzahn 13 und die Endklaue 11 nicht kollisionsfrei aneinander vorbeigehen können, sondern in kämmenden Eingriff bringbar sind, der nach einer bestimmten, zum Spannen des Schlagbügels 2 ausreichenden Strecke beendet ist.

Nach der Beendigung eines Schlags liegt der Schlagbügel 2, wie aus Figur 1 ersichtlich ist, am zugeordneten Anschlag 10 an. Wenn der Mitnehmerzahn 13 der Spanneinrichtung 12 bei am Anschlag 10 anliegendem Schlagbügel 2 in Schlagrichtung, also entgegen der Spannrichtung, an der Endklaue 11 vorbeibewegt wird, indem der Schwenkhebel der Spanneinrichtung 12 in die in Figur 1 mit strichpunktierten Linien angedeutete Stellung gebracht wird, ergibt sich eine Kollision mit der Endklaue 11, wobei diese zunächst federnd zurückweicht und dann unter den Mitnehmerzahn 13 einrastet. Um dies zu erleichtern, ist die Außenflanke, d.h. die in Schlagrichtung weisende Flanke des Mitnehmerzahns 13 als gebogene bzw. abgeschrägte Anlauffläche 15 ausgebildet, an der die Endklaue 11 beim Anlaufen des Mitnehmerzahns 13 entlanggleiten kann.

Die gegenüberliegende Innenflanke des Mitnehmerzahns 13 ist als vorzugsweise ebene Druckfläche 16 ausgebildet, die nach dem Einrasten der Endklaue 11 unter den Mitnehmerzahn 13 eine Stützkraft auf die Endklaue 11 übertragen kann. Die Druckfläche 16 nimmt bei einer Bewegung des Mitnehmerzahns 13 in Spannrichtung, im dargestellten Beispiel nach unten, die Endklaue 11 des Schlagbügels 2 mit, wodurch dieser entgegen seiner eigenen Federkraft gespannt wird. Im Laufe dieser Spannbewegung verkleinert sich automatisch die gegenseitige Überdeckung von Endklaue 11 und Druckfläche 16 des Mitnehmerzahns 13, da die Bewegungskurven dieser beiden Organe gegenläufig gekrümmt sind. Der Spannvorgang ist beendet, wenn die Endklaue 11 und der Mitnehmerzahn 13 keine gegenseitige Überdeckung mehr haben und dementsprechend außer gegenseitigem Eingriff sind. Dies ist praktisch im Schnittpunkt der beiderseitigen Bewegungskurven der äußersten Spitzen dieser beiden Organe der Fall.

Der dabei freigegebene Schlagbügel 2 schnellt unter der Wirkung seiner Federenergie in die der Figur 1 zugrundeliegende Position zurück, wobei ein Schlag auf einen im Bereich der Randeinbuchtung 8 sich befindenden Gegenstand ausgeübt wird. Notfalls können mehrere aufeinanderfolgende Schläge ausgeführt werden, in dem der Abzug 14 der Spanneinrichtung 12 mehrfach hintereinander betätigt wird.

Zur Erleichterung der Handhabung und Bedienung des erfindungsgemäßen Schlaggeräts enthält die Spanneinrichtung 12 eine dem zweiarmigen Schwenkhebel zugeordnete Feder 17, die so angeordnet ist, dass der Abzug 14 unter ihrer Wirkung vom Tragkörper 1 abgestellt wird, wobei der Mitnehmerzahn 13 die Endklaue 11 des am Anschlag 10 anliegenden Schlagbügels 2 überspringt, wie in Figur 1 mit strichpunktierten Linien angedeutet ist. Sobald der Abzug 14 an den Tragkörper 1 angestellt wird, wird der Schlagbügel 2 zunächst gespannt und dann freigegeben, wodurch ein Schlag ausgeführt wird.

Im dargestellten Beispiel ist der Abzug 14 im Tragkörper 1 versenkbar, was eine besonders bequeme Handhabung und kompakte Anordnung ergibt. Die den Tragkörper 1 bildenden Gehäuseteile 1a, 1b sind dementsprechend im Bereich des Abzugs 14 so ausgenommen, dass sich ein dem Abzug 14 zugeordneter Einfahrschlitz ergibt. Zur Betätigung des Abzugs 14 wird dieser mit den Fingern der Hand umfaßt, in welcher der Tragkörper 1 mit seinem Stiel 7 gehalten wird. Um ein Abrutschen vom Abzug 14 zu verhindern, kann der Schwenkhebel im Bereich des Übergangs zwischen Mitnehmerzahn 13 und Abzug 14 einen als Anschlag fungierenden Vorsprung 18 aufweisen.

Der den Abzug 14 enthaltende Schwenkhebel ist bei an den Tragkörper 1 angelegtem bzw. hier in den Tragkörper 1 eingefahrenem Abzug 14 verriegelbar. Hierzu ist im dargestellten Beispiel ein am hinteren Ende des Tragkörpers 1 schwenkbar angeordneter, ösenförmiger Riegel 19 vorgesehen, der in - bzw. außer Eingriff mit dem Abzug 14 bringbar ist. Zur Erleichterung der Handhabung kann der Riegel 19 mit einer Betätigungslasche 20 versehen sein. Bei eingelegtem Riegel 19 wird der Abzug 14 durch die Feder 17 in Anlage am Riegel 19 gehalten, wodurch die Verriegelung stabilisiert wird.

Im Bereich des vom dem Schlagbügel 2 zugeordneten Kopf 6 abgewandten Endes des Stiels 7 des Tragkörpers 1 ist im dargestellten Beispiel eine Stechklinge 21 vorgesehen. Diese ist mit einem Schieber 22 verbunden und mit Hilfe dieses Schiebers 22 nach hinten aus dem Stiel 7 des Tragkörpers 1 herausfahrbar. Der Schieber 22 ist hierzu verschiebbar auf dem Stiel 7 angeordnet und mit einem einen Schlitz 23 durchgreifenden Ansatz versehen, an dem die Klinge 21 gehaltert ist. Die Gehäuseteile 1a, 1b sind zur Bildung des Schlitzes 23 randseitig ausgenommen. Der Stechklinge 21 ist eine Rückzugsfeder 24 zugeordnet, durch welche die Stechklinge 21 automatisch in den Tragkörper 1 zurückgezogen wird, sobald der Schieber 22 losgelassen wird. Beim Ausfahren der Stechklinge 21 mittels des Schiebers 22 wird die Rückzugsfeder 24 gespannt.

Das erfindungsgemäße Schlaggerät ermöglicht eine ordnungsgemäße Betäubung und Tötung von kleineren Schlachttieren, insbesondere Fischen. Wenn ein Fischer einen Fisch gefangen hat, legt der Fischer das Schlaggerät so am Kopf des Fisches an, dass der Kopf des Fisches in die dem Schlagbügel 2 zugeordnete Randeinbuchtung 8 eintaucht und dementsprechend vom Schlagbügel 2 getroffen wird, sobald der Abzug 14 betätigt wird. Notfalls können, wie oben schon erwähnt, durch wiederholtes Betätigen des Abzugs 14 mehrere aufeinanderfolgende Schläge ausgeführt werden. Dadurch wird der Fisch zuverlässig betäubt, in manchen Fällen auch bereits getötet. Um eine sichere Tötung zu gewährleisten, muss anschließend ein Herzstich etc. ausgeführt werden. Hierzu wird die Stechklinge 21 entgegen der Wirkung der Rückzugsfeder 24 betätigt.

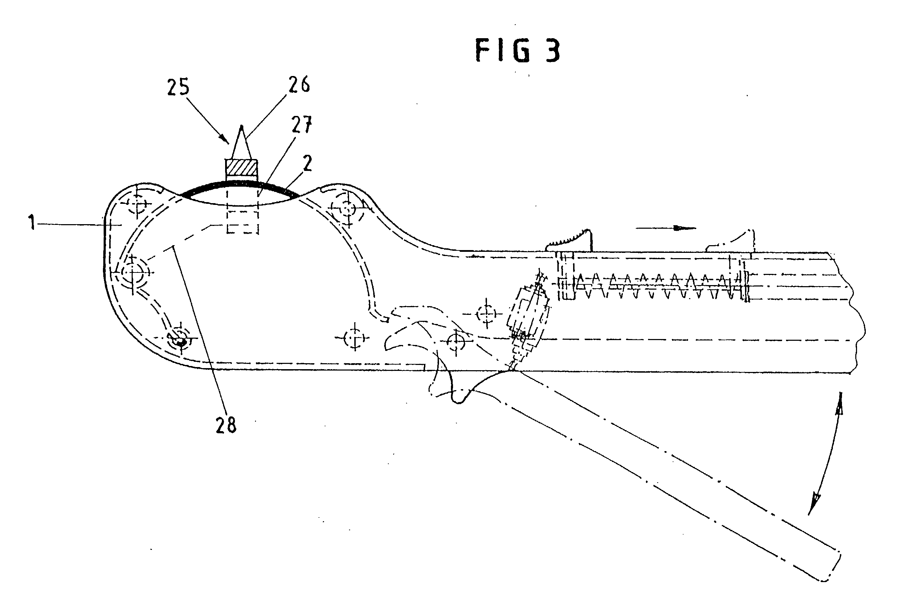

Die Figur 3 zeigt ein Schlaggerät mit einem mit einem Aufsatz versehenen Schlagbügel. Ansonsten kann der Aufbau des Schlaggeräts dem Aufbau der Anordnung gemäß Figuren 1 und 2 entsprechen. Für gleiche Teile finden daher gleiche Bezugszeichen Verwendung.

Bei dem der Figur 3 zu Grunde liegenden Beispiel ist dem Schlagbügel 2 ein Schlaghammer 25 zugeordnet, der mittels des Schlagbügels 2 betätigbar ist. Der Schlaghammer 25 ist mit einem in Schlagrichtung abstehenden Dorn 26 versehen, der praktisch als Meißel fungiert. Dieser wird mittels des Schlagbügels 2 in den Schädelknochen des betroffenen Tiers eingetrieben, womit eine schnelle und zuverlässige Tötung erfolgt. Diese zusätzliche Maßnahme findet insbesondere bei vergleichsweise großen und starken Tieren, wie schweren Raubfischen, Verwendung.

Beim dargestellten Beispiel ist der Schlaghammer 25 als reiterartiger Aufsatz des Schlagbügels 2 ausgebildet. Der Aufsatz kann am Schlagbügel befestigt sein. Zweckmäßig ist der Schlagbügel 2 jedoch gegenüber dem Schlaghammer 25 in Spannrichtung bewegbar. Dies ermöglicht die Durchführung mehrerer aufeinander folgender Schläge zum Vortrieb des Schlaghammers 25, ohne dessen Dorn 26 zurückzuziehen zu müssen. Im dargestellten Beispiel ist der Schlaghammer 25 mit einem vom Schlagbügel 2 mit entsprechendem Spiel durchgriffenen Langloch bzw. Schlitz 27 versehen. Zur Erzielung einer guten Schlagwirkung wird der Schlaghammer an den gespannten Schlagbügel angelegt. Hierzu ist eine am Gehäuse 1 abgestützte, hier als Schenkelfeder ausgebildete Feder 28 vorgesehen, die aber wesentlich schwächer als die den Schlagbügel 2 bildende Feder ist und somit vom Schlagbügel überwunden wird.

Zur Sicherung einer exakten Ausrichtung des Schlaghammers kann dieser am Tragkörper 1 in Schlagrichtung bewegbar geführt und mit einem mit dem Tragkörper 1 zusammenwirkenden Anschlag versehen sein, der verhindert, dass der Schlaghammer 25 außer Eingriff mit der Führung kommt bzw. verloren werden kann. Sofern der Schlaghammer mit einem vom Schlagbügel 2 durchgriffenen Langloch-Ausnehmung 27 versehen ist, fungiert deren Ende als Anschlag.

## Patentansprüche

1. Schlaggerät zum Betäuben und/oder Töten von kleineren Schlachttieren, insbesondere Fischen, mit einem schaftförmigen Tragkörper (1), auf dem ein an einem Ende gehaltener, entgegen der Wirkung einer Federkraft spannbarer Schlagbügel (2) und eine diesem zugeordnete Spanneinrichtung (12) aufgenommen sind, **dadurch gekennzeichnet, dass** die Spanneinrichtung (12) einen Schwenkhebel mit einem griffartigen Abzug (14) und einem mit einer am freien Ende des Schlagbügels (2) vorgesehenen Endklaue (11) in und außer kämmenden Eingriff bringbaren Mitnehmerzahn (13) aufweist, dessen äußerste Bewegungskurve die äußerste Bewegungskurve der Endklaue (11) überschneidet.

2. Schlaggerät nach Anspruch 1, **dadurch gekennzeichnet, dass** die Schlagbewegung des Schlagbügels (2) durch einen Anschlag (10) begrenzt ist.

3. Schlaggerät nach Anspruch 2, **dadurch gekennzeichnet, dass** die Endklaue (11) des am Anschlag (10) anliegenden Schlagbügels (2) unter den Mitnehmerzahn (13) federnd einrastbar ist, der eine als Anlaufkurve (15) und eine als Druckfläche (16) ausgebildete Flanke aufweist.

4. Schlaggerät nach einem der vorhergehenden Ansprüche, **dadurch gekennzeichnet, dass** der Abzug (14) der Spanneinrichtung (12), der durch eine Abstellfeder (17) vom Tragkörper (1) abstellbar und zum Spannen des Schlagbügels (2) an den Tragkörper (1) heranholbar ist, in der tragkörperseitigen Endstellung verriegelbar und vorzugsweise im Tragkörper (1) versenkbar ist.

5. Schlaggerät nach einem der vorhergehenden Ansprüche, **dadurch gekennzeichnet, dass** der Schlagbügel (2) als Feder, vorzugsweise als freier Schenkel einer Schenkelfeder ausgebildet ist, die mit ihrer Windung (4) auf einem Lagerstift aufgenommen ist und deren zweiter Schenkel (5) am Tragkörper (1) abgestützt ist.

6. Schlaggerät nach einem der vorhergehenden Ansprüche, **dadurch gekennzeichnet, dass** der Tragkörper (1), der einen dem Schlagbügel (2) zugeordneten Kopf (6) aufweist, von dem ein Stiel (7) absteht, kopfseitig eine dem Schlagbügel (2) zugeordnete, konkave Randeinbuchtung (8) aufweist, in die der Schlagbügel (2), der eine in Schlagrichtung konvexe Konfiguration aufweist beim Ausführen eines Schlags mit einem mittleren Bogenabschnitt eintaucht.

7. Schlaggerät nach einem der vorhergehenden Ansprüche, **dadurch gekennzeichnet, dass** der Tragkörper (1) im Bereich seines vom Schlagbügel (2) weiter entfernten Endes mit einer Stechklinge (21) versehen ist, die vorzugsweise mittels eines Schiebers (22) entgegen der Wirkung einer Rückzugsfeder (24) aus dem Stiel (7) des Tragkörpers (1) ausfahrbar ist.

8. Schlaggerät nach einem der vorhergehenden Ansprüche, **dadurch gekennzeichnet, dass** der Tragkörper (1) zwei durch Querstifte (3) miteinander verbundene, mit ihren Rändern zumindest teilweise aneinander anliegende Gehäuseteile (1a,b) aufweist.

9. Schlaggerät nach einem der vorhergehenden Ansprüche, **dadurch gekennzeichnet, dass** dem Schlagbügel (2) ein vorzugsweise mit einem Dorn (26) versehener Schlaghammer (25) zugeordnet ist.

10. Schlaggerät nach Anspruch 9, **dadurch gekennzeichnet, dass** der Schlaghammer (25) in Spannrichtung gegenüber dem Schlagbügel (2) bewegbar und mittels einer Feder (28) an den gespannten Schlagbügel (2) anlegbar ist.

## Claims

1. A striking implement for stunning and/or killing small animals to be slaughtered, particularly fish, with a shaft-shaped carrier body (1), on which a striking bow (2), supported on one end and tensionable against the action of a spring resistance, and a tensioning device (12), allocated to the striking bow, are accommodated, **characterized in that** the tensioning device (12) has a pivoting lever with a grip-like trigger (14) and a driver tooth (13), which can engage and disengage from an end catch (11) provided on the free end of the striking bow (2), whose outermost movement curve intersects the outermost movement curve of the end catch (11).

2. The striking implement according to claim 1, **characterized in that** the striking movement of the striking bow (2) is limited by a stop (10).

3. The striking implement according to claim 2, **characterized in that** the end catch (11) of the striking bow (2) lying against the stop (10) can be elastically engaged under the driver tooth (13), which has one flank implemented as a lift curve (15) and one flank implemented as a pressing surface (16).

4. The striking implement according to one of the preceding claims, **characterized in that** the trigger (14) of the tensioning device (12), which can be shut off from the carrier body (1) by a shut-off spring (17) and can be brought toward the carrier body (1) to tension the striking bow (2), can be locked into the end position toward the carrier body and can preferably be sunk into the carrier body (1).

5. The striking implement according to one of the preceding claims, **characterized in that** the striking bow (2) is implemented as a spring, preferably as the free leg of a leg spring, whose winding (4) is accommodated on a stud and whose second leg (5) is supported on the carrier body (1).

6. The striking implement according to one of the preceding claims, **characterized in that** the carrier body (1), which has a head (6) allocated to the striking bow (2), from which a handle (7) extends, has a concave indentation (8) allocated to the striking bow (2) on the edge of the head, into which the central section of the curve of the striking bow (2), which has a convex configuration in the direction of striking as a strike is performed, dips.

7. The striking implement according to one of the preceding claims, **characterized in that** the carrier body (1) is provided with a piercing blade (21), in the region of its end further from the striking bow (2), which can preferably be extended by means of a slider (22), against the action of a return spring (24), out of the handle (7) of the carrier body (1).

8. The striking implement according to one of the preceding claims, **characterized in that** the carrier body (1) has two housing parts (1a,b), whose edges are at least partially in contact with one another, connected to one another with transverse pins (3).

9. The striking implement according to one of the preceding claims, **characterized in that** the striking bow (2) is allocated a striking hammer (25), which is preferably provided with a dome (26).

10. The striking implement according to claim 9, **characterized in that** the striking hammer (25) can be moved in the direction of tension relative to the striking bow (2) and can be pressed against the tensioned striking bow (2) by means of a spring (28).

## Revendications

1. Outil de frappe destiné à insensibiliser et/ou à tuer des animaux à abattre plus petits, en particulier poissons, comprenant un corps porteur (1) en forme de tige qui reçoit une pièce courbe de frappe (2) qui est tenue à une extrémité et peut être tendue à l'encontre de l'effet d'une force de ressort, ainsi qu'un dispositif tendeur (12) qui est associé à ladite pièce courbe de frappe, **caractérisé par le fait que** le dispositif tendeur (12) présente un levier de pivotement avec une détente (14) ressemblant à un manche et avec une dent d'entraînement (13) qui peut être mise en et hors prise peignante avec une griffe terminale (11) prévue à l'extrémité libre de la pièce courbe de frappe (2), et dont la courbe extrême de mouvement se coupe avec la courbe extrême de mouvement de la griffe terminale (11).

2. Outil de frappe selon la revendication 1, **caractérisé par le fait que** le mouvement de frappe de la pièce courbe de frappe (2) est limité par une butée (10).

3. Outil de frappe selon la revendication 2, **caractérisé par le fait que** la griffe terminale (11) de la pièce courbe de frappe (2) s'appuyant sur la butée (10) peut être enclenchée d'une manière élastique sous la dent d'entraînement (13) qui présente un flanc réalisé comme courbe de guidage (15) et un flanc réalisé comme surface de pression (16).

4. Outil de frappe selon l'une des revendications précédentes, **caractérisé par le fait que** la détente (14) du dispositif tendeur (12), qui est apte à être écartée du corps porteur (1) par un ressort d'écartement (17) et à être rapprochée du coprs porteur (1) pour tendre la pièce courbe de frappe (2), peut être verrouillée dans la position finale située du côté du corps porteur et, de préférence, être enfoncée dans le corps porteur (1).

5. Outil de frappe selon l'une des revendications précédentes, **caractérisé par le fait que** la pièce courbe de frappe (2) est réalisée comme ressort, de préférence comme branche libre d'un ressort à branches qui, avec sa spire (4), est reçu sur une goupille de logement et dont la deuxième branche (5) est appuyée sur le corps porteur (1).

6. Outil de frappe selon l'une des revendications précédentes, **caractérisé par le fait que** le corps porteur (1) qui présente une tête (6) qui est associée à la pièce courbe de frappe (2) et à partir de laquelle s'étend une tige (7), présente - du côté de la tête - une échancrure de bord (8) concave qui est associée à la pièce courbe de frappe (2) et dans laquelle la pièce courbe de frappe (2) présentant une configuration convexe dans la direction de frappe plonge avec une section d'arc centrale lorsqu'on exerce une frappe.

7. Outil de frappe selon l'une des revendications précédentes, **caractérisé par le fait que,** dans la zone de son extrémité située plus loin de la pièce courbe de frappe (2), le corps porteur (1) est pourvu d'une lame de pointe (21) qui, de préférence, au moyen d'un coulisseau (22), peut sortir de la tige (7) du corps porteur (1) à l'encontre de l'effet d'un ressort de rappel (24).

8. Outil de frappe selon l'une des revendications précédentes, **caractérisé par le fait que** le corps porteur (1) présente deux parties de boîtier (1a, b) qui sont reliées entre elles par le biais de goupilles transversales (3) et qui s'appliquent, au moins en partie, l'une contre l'autre avec leurs bords.

9. Outil de frappe selon l'une des revendications précédentes, **caractérisé par le fait qu**'un marteau de frappe (25) pourvu de préférence d'une épine (26) est associé à la pièce courbe de frappe (2).

10. Outil de frappe selon la revendication 9, **caractérisé par le fait que** le marteau de frappe (25) peut être déplacé par rapport à la pièce courbe de frappe (2) dans la direction de tension et peut être appuyé sur la pièce courbe tendue de frappe (2) au moyen d'un ressort (28).
